# EUROPEAN PATENT APPLICATION

(11) **EP 1 392 056 A1**
(43) Date of publication of application: **25.02.2004**
(21) Application number: 02728113.8
(22) Date of filing: 22.05.2002
(51) Int. Cl.: H04N 5/445, G06F 3/00, H04B 1/16

(54) **BROADCAST PROGRAM DISPLAY METHOD,BROADCAST PROGRAM DISPLAY APPARATUS AND BROADCAST RECEIVER**

(30) Priority: 23.05.2001 JP 2001153992
(71) Applicant: Sony Corporation, Tokyo 141-0001 (JP)
(72) Inventor: IKEDA, Hidekazu, Sony Corporation, Tokyo 141-0001 (JP)
(74) Representative: Turner, James Arthur
(86) International application number: PCT/JP2002/004960
(87) International publication number: WO 2002/096103

(57) **Abstract**

In an apparatus capable of listing broadcast programs, there are provided a broadcast program display method, a broadcast program display apparatus, and a broadcast receiver configured to list broadcast programs matching an interest and the other broadcast programs with varied visibilities on the screen so as to be able to efficiently select intended broadcast programs from many ones. The apparatus is provi ded wi th a program display means for listing broadcast programs on the screen. The program display means lists broadcast programs matching an intended interest, e.g., those selected in accordance with a genre or the like and the other broadcast programs with varied visibilities on the screen.

## Description

### Technical Field

The present invention relates to a broadcast program display method, a broadcast program display apparatus, and a broadcast receiver. More particularly, the present invention relates to a broadcast program display method, a broadcast program display apparatus, and a broadcast receiver for easily retrieving intended broadcast programs by devising methods to display broadcast programs and providing identifiable properties capable of comparing specified program information with the other program information.

### Background Art

According to a prior art, for example, the EPG (Electronic Program Guide) is a representative example of displaying broadcast programs. It is a general practice to access an EPG server, download EPG information, display a list of downloaded electronic program information on a screen, and select an intended program.

When a list of EPG information is displayed for selecting an intended program as conventionally practiced, however, there may be displayed many programs, making it inconvenient and difficult to find the intended program.

Broadcasts in the future may tend to be digitized and increase the number of programs. It is anticipated that the audience will feel it difficult to find intended programs more and more.

On condition that a specified device can list many broadcast programs, there is a problem to be solved by a broadcast program display method, a broadcast program display apparatus, and a broadcast receiver for easily retrieving intended programs so as to be able to compare a display of broadcast programs covered by the superordinate concept of intended interests with a display of the other broadcast programs out of the listed broadcast programs.

### Disclosure of the Invention

In order to solve the above-mentioned problem, the broadcast program display method, the broadcast program display apparatus, and the broadcast receiver according to the present invention should be configured as follows.
(1) According to a first aspect of the present invention, there is provided a broadcast program display method characterized in that an apparatus is provided with a program display means for listing a broadcast program on a screen; and the program display means lists broadcast programs matching an interest and the other broadcast programs with varied visibilities on the screen.
(2) According to a second aspect of the present invention, thereisprovidedthebroadcastprogramdisplaymethod as defined in the first aspect (1), characterized in that the broadcast program matching an interest is selected in accordance with any of or a combination of a broadcast program genre, a broadcast program channel, a broadcasting time slot, broadcast program cours, and a broadcast program name.
(3) According to a third aspect of the present invention, there isprovided thebroadcastprogramdisplaymethod as defined in the second aspect (2), wherein the broadcast program genre comprises at least drama, news, and sport.
(4) According to a fourth aspect of the present invention, thereisprovidedthebroadcastprogramdisplaymethod asdefinedinthefirstaspect (1), characterized in that a display mode for listing broadcast programs with varied visibilities on a screen saves data for a setup item specified during selection of a broadcast program matching an interest and lists subsequent broadcast programs on the screen using the setup item data.
(5) According to a fifth aspect of the present invention, thereisprovidedthebroadcastprogramdisplaymethod as defined in the first aspect (1), wherein the display mode for listing broadcast programs with varied visibilities on a screen provides different displays for selected and unselected broadcast programs.
(6) According to a sixth aspect of the present invention, thereisprovidedthebroadcastprogramdisplaymethod as defined in the fifth aspect (5), wherein the display mode of providing different displays for selected and unselected broadcast programs does not change a display of selected broadcast programs and displays an unselected broadcast program in any of such states as hidden, dimmed, blurred, dimmed and blurred, displayed with a different color, blurred with a different color, dimmed with a different color, and dimmed and blurred with a different color.
(7) According to a seventh aspect of the present invention, there is provided the broadcast program display method as defined in the sixth aspect (6), wherein the display mode by dimming can dim the displayed content as much as to make it unrecognizable.
(8) According to an eighth aspect of the present invention, there is provided the broadcast program display method as defined in the fifth aspect (5), wherein the display mode of providing different displays for selected and unselected broadcast programs does not change a display of selected broadcast programs and displays an unselected broadcast program in any of such states as displayed with a different font and/or character size for character information, dimmedwithadifferent font and/or character size for character information, blurred with a different font and/or character size for character information, dimmed and blurred with a different font and/or character size for character information, displayed with a different color and a different font and/or character size for character information, blurred with a different color and a different font and/or character size for character information, dimmed with a different color and a different font and/or character size for character information, and dimmed and blurred with a different color and a different font and/or character size for character information.
(9) According to a ninth aspect of the present invention, thereisprovidedthebroadcastprogramdisplaymethod as defined in the eighth aspect (8), wherein the display mode by dimming can dim the displayed content as much as to make it unrecognizable.
(10) According to a tenth aspect of the present invention, there is provided a broadcast program display apparatus comprising:
   a reception section capable of receiving a broadcast program;
   a display section capable of listing the received broadcast program;
   an operation section which sets a display mode for broadcast programs listed on the display section; and
   a program display control means for listing broadcast programs selected by an operation of the operation section so as to match an interest and the other broadcast programs with varied visibilities on the screen.
(11) According to an eleventh aspect of the present invention, there is provided the broadcast program display apparatus as defined in the tenth aspect (10), characterized
   in that the broadcast program matching an interest is selected in accordance with any of or a combination of a broadcast program genre, a broadcast program channel, a broadcasting time slot, broadcast program cours, and a broadcast program name.
(12) According to a twelfth aspect of the present invention, there is provided the broadcast program display apparatus as defined in the tenth aspect (10), wherein the broadcast program genre comprises at least drama, news, and sport.
(13) According to a thirteenth aspect of the present invention, there is provided the broadcast program display apparatus as defined in the tenth aspect (10), characterized in that a display mode for listing broadcast programs with varied visibilities on a screen saves data for a setup item specified during selection of a broadcast program matching an interest and lists subsequent broadcast programs on the screen using the setup item data.
(14) According to a fourteenth aspect of the present invention, there is provided the broadcast program display apparatus as defined in the tenth aspect (10) , wherein the display mode for listing broadcast programs with varied visibilities on a screen provides different displays for selected and unselected broadcast programs.
(15) According to a fifteenth aspect of the present invention, there is provided the broadcast program display apparatus as defined in the fourteenth aspect (14), wherein the display mode of providing different displays for selected and unselected broadcast programs does not change a display of selected broad cast programs and displays an unselected broadcast program in any of such states as hidden, dimmed, blurred, dimmed and blurred, displayed with a different color, blurred with a different color, dimmed with a different color, and dimmed and blurred with a different color.
(16) According to a sixteenth aspect of the present invention, there is provided the broadcast program display apparatus as defined in the fifteenth aspect (15), wherein the display mode by dimming can dim the displayed content as much as to make it unrecognizable.
(17) According to a seventeenth aspect of the present invention, there is provided the broadcast program display apparatus as defined in the fourteenth aspect (14) , wherein the display mode of providing different displays for selected and unselected broadcast programs does not change a display of selected broadcast programs and displays an unselected broadcast program in any of such states as displayed with a different font and/or character size for character information, dimmed with a different font and/or character size for character information, blurred with a different font and/or character size for character information, dimmed and blurred with a different font and/or character size for character information, displayed with a different color and a different font and/or character size for character information, blurred with a different color and a different font and/or character size for character information, dimmed with a different color and a different font and/or character size for character information, and dimmed and blurred with a different color and a different font and/or character size for character information.
(18) According to an eighteenth aspect of the present invention, there is provided a broadcast receiver having a tuner section to receive a broadcast signal and an output section to output the broadcast signal received by the tuner section, the broadcast receiver comprising:
   a reception section capable of receiving a broadcast program;
   a display section capable of listing the received broadcast program;
   an operation section which sets a display mode for broadcast programs listed on the display section; and
   a program display control means for listing broadcast programs selected by an operation of the operation section so as to match an interest and the other broadcast programs with varied visibilities on the screen.
(19) According to a nineteenth aspect of the present invention, there is provided the broadcast receiver as defined in the eighteenth aspect (18), characterized in that a program display control means for listing broadcast programs selected by an operation of the operation section so as to match an interest and the other broadcast programs with varied visibilities on the screen.
(20) According to a twentieth aspect of the present invention, there is provided the broadcast receiver as defined in the nineteenth aspect (19), wherein the broadcast program genre comprises at least drama, news, and sport.
(21) According to a twenty-first aspect of the present invention, there is provided the broadcast receiver as defined in the eighteenth aspect (18), characterized in that a display mode for listing broadcast programs with varied visibilities on a screen saves data for a setup item specified during selection of a broadcast program matching an interest and lists subsequent broadcast programs on the screen using the setup item data.
(22) According to a twenty-second aspect of the present invention, there is provided the broadcast receiver as defined in the eighteenth aspect (18), wherein the display mode for listing broadcast programs with varied visibilities on a screen provides different displays for selected and unselected broadcast programs.
(23) According to a twenty-third aspect of the present invention, there is provided the broadcast receiver as defined in the twenty-second aspect (22), wherein the display mode of providing different displays for selected and unselected broadcast programs does not change a display of selected broadcast programs and displays an unselected broadcast program in any of such states as hidden, dimmed, blurred, dimmed and blurred, displayed with a different color, blurred with a different color, dimmed with a different color, and dimmed and blurred with a different color.
(24) According to a twenty-fourth aspect of the present invention, there is provided the broadcast receiver as defined in the twenty-third aspect (23), wherein the display mode by dimming can dim the displayed content as much as to make it unrecognizable.
(25) According to a twenty- f if th aspect of thepresent invention, there is provided the broadcast receiver as defined in the twenty-second aspect (22), wherein the display mode of providing different displays for selected and unselected broadcast programs does not change a display of selected broadcast programs and displays an unselected broadcast program in any of such states as displayed with a different font and/or character size for character information, dimmed with a different font and/or character size for character information, blurred with a different font and/or character size for character information, dimmed and blurred with a different font and/or character size for character information, displayed with a different color and a different font and/or character size for character information, blurred with a different color and a different font and/or character size for character information, dimmed with a different color and a different font and/or character size for character information, and dimmed and blurred with a different color and a different font and/or character size for character information.

As mentioned above, the present invention varies the visibility in accordance with interests when listing the received broadcast program information. That is to say, the present invention extracts only programs that match audience's preferences from a large amount of broadcast program information and visualizes the extracted programs by contrast with the others, making it easy to find intended broadcast programs.

### Brief Description of the Drawings

FIG. 1 schematically shows an overall configuration of a broadcast receiver having a broadcast program display apparatus according to the present invention;
FIG. 2 is a flowchart of a main routine for a program display control section to display programs and change settings;
FIG. 3 is a flowchart for changing settings;
FIG. 4 is a flowchart for displaying programs;
FIG. 5 is an explanatory diagram illustrating a normal display screen;
FIG. 6 is an explanatory diagram illustrating a display screen when "drama" is selected from the genre setting;
FIG. 7 is an explanatory diagram illustrating a display screen when "news" is selected from the genre setting;
FIG. 8 is an explanatory diagram illustrating a display screen by dimming programs other than dramas;
FIG. 9 is an explanatory diagram illustrating a display screen by dimming programs other than news;
FIG. 10 is an explanatory diagram illustrating how a program is directly selected to be displayed or hidden;
FIG. 11 is an explanatory diagram illustrating a display screen using a small font size to display genres other than the news;
FIG. 12 is an explanatory diagram illustrating a display screen using different fonts to display individual genres;
FIG. 13 is an explanatory diagram illustrating a normal display screen;
FIG. 14 is an explanatory diagram illustrating a display screen when "drama" is selected from the genre setting;
FIG. 15 is an explanatory diagram illustrating a display screen when "news" is selected from the genre setting;
FIG. 16 is an explanatory diagram illustrating a display screen by dimming programs other than dramas;
FIG. 17 is an explanatory diagram illustrating a display screen by dimming programs other than news; and

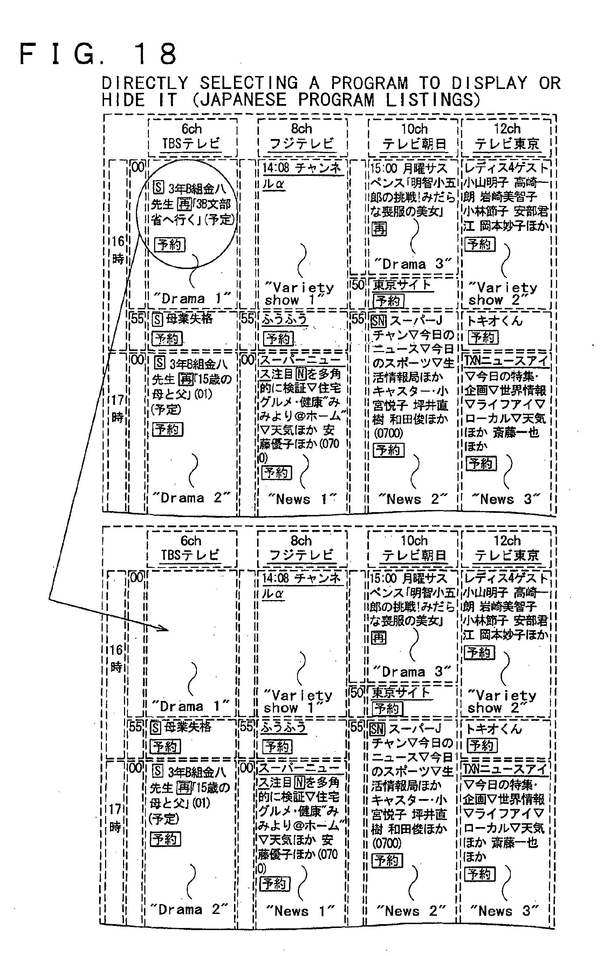

FIG. 18 is an explanatory diagram illustrating how a program is directly selected to be displayed or hidden.

### Best Mode for Carrying out the Invention

With reference to the accompanying drawings, the following describes embodiments of the broadcast program display method, the broadcast program display apparatus, and the broadcast receiver according to the present invention.

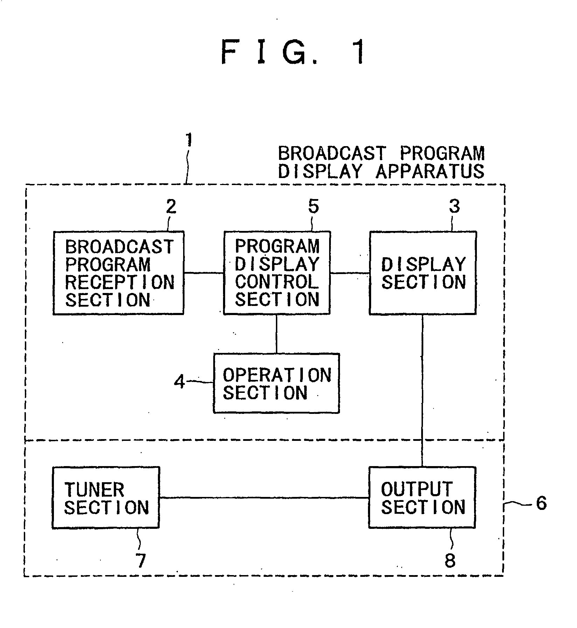

Normally, the broadcast program display apparatus is configured to be included in the broadcast receiver for embodying the broadcast program display method. As shown in FIG. 1, for example, the broadcast program display apparatus comprises a broadcast program display apparatus 1 and a broadcast reception section 6.

The broadcast program display apparatus 1 comprises a broadcast program reception section 2 which receives broadcast program information such as an EPG; a display section 3 capable of using a screen to list broadcast programs received by the broadcast program reception section 2; an operation section 4 which selects the listed broadcast programs and changes display modes for the programs; and a program display control section 5 which lists broadcast programs matching intended interests and the other broadcast programs by varying the visibility in accordance with an operation of the operation section 4.

The broadcast reception section 6 comprises a tuner section 7 which receives broadcast signals such as digital broadcasting; and an output section 8 which outputs the broadcast signals (video and audio signals) received by the tuner section 7. The output section 8 comprises a screen to display videos and a speaker to generate voice.

In the broadcast program display apparatus 1 having the above-mentioned configuration, for example, broadcast programs are categorized into genres so that the program display control section 5 can provide the capability of selecting broadcast programs matching the intended interests. For example, the broadcast programs are categorized into such genres as news, drama, and sports for enhancing the visibility of a specified genre.

Data for enhancing the visibility is stored in a storage means (not shown). The programs can be later listed based on data for the predefined setup items without needing to allow the operation section 4 to set the data again. This makes it possible to semiautomatically select and list only preferred broadcast programs. If there is a large amount of broadcast program information to be received, it becomes possible to receive only preferred broadcast program information. Even if there are large quantities of preferred broadcast program information, it is possible to further retrieve some of the preferred broadcast programs, greatly decreasing inconvenience such as a complicated operation.

Broadcast programs matching several types of interests may be available for a technique of storing data in the storage means and using it for subsequent operations. Accordingly, it is possible to list only a wide variety of broadcast programs suited for the audience with the enhanced visibility.

In this manner, changing the visibility is categorized into (1) changing the display itself, (2) changing character fonts, and (3) changing character sizes.
(1) The technique of changing the display itself changes the method of displaying a broadcast program depending on whether it is selected or not. This technique does not change the display of selected broadcast programs. An unselected broadcast program is set to any of such states as hidden, dimmed, blurred, dimmed and blurred, displayed with a different color, blurred with a different color, dimmed with a different color, and dimmed and blurred with a different color. The display mode by dimming can dim the displayed content as much as to make it unrecognizable.
(2) The technique of changing character fonts displays an unselected broadcast program by changing a font for the character information without changing the display of a selected broadcast program. The unselected broadcast program is set to any of such states as dimmed with a different font for character information, blurred with a different font for character information, dimmed and blurred with a different font for character information, displayed with a different color and font for character information, blurred with a different color and font for character information, dimmed with a different color and font for character information, and dimmed and blurred with a different color and font for character information. The display mode by dimming can dim the displayed content as much as to make it unrecognizable.
(3) The technique of changing character sizes displays an unselected broadcast program by changing a font size for the character information without changing the display of a selected broadcast program. The unselected broadcast program is set to any of such states as dimmed with a different font size for character information, blurred with a different font size for character information, dimmed and blurred with a different font size for character information, displayed with a different color and font size for character information, blurred with a different color and font size for character information, dimmed with a different color and font size for character information, and dimmed and blurred with a different color and font size for character information. The display mode by dimming can dim the displayed content as much as to make it unrecognizable.

Examples of the above-mentioned program listings will be described hereinafter with reference to the accompanying drawings.

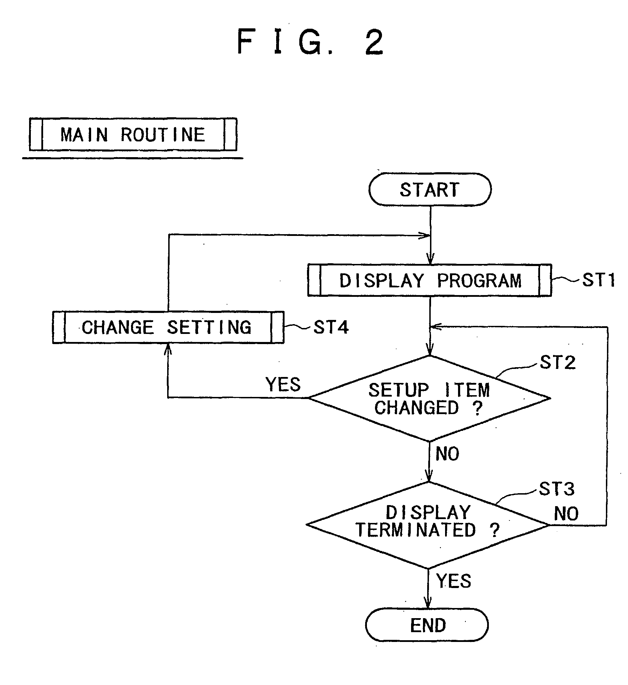

FIG. 2 diagrams how to list a broadcast program and change its display mode. When the broadcast program is received, the received broadcast program information is displayed on the display section 3 (step ST1).

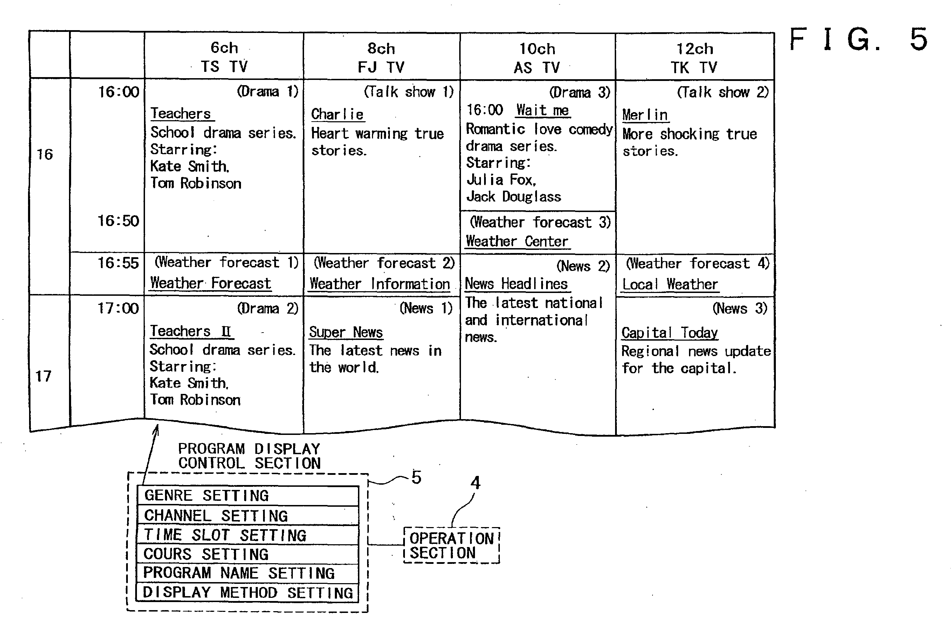

As shown in FIG. 5, for example, a normal display screen contains four channels 6ch, 8ch, 10ch, and 12ch in time slots between 16:00 and 17:00. The 6ch (TS TV) provides "drama 1", "weather forecast 1", and "drama 2" in the 16:00 and 17:00 time slots. The 8ch (FJTV) provides "talk show" and "weather forecast 2" in the 16:00 time slot and "news 1" in the 17:00 time slot. The 10ch (AS TV) provides "drama 3" and "weather forecast 3" in the 16 : 00 time slot and "news 2" in the 17 : 00 time slot including the 16:00 time slot. The 12ch (TK TV) provides "talk show 2" and "weather forecast 4" in the 16:00 time slot and "news 3" in the 17:00 time slot. Each program contains description of the title, concise explanation of the program, cast names, and the like.

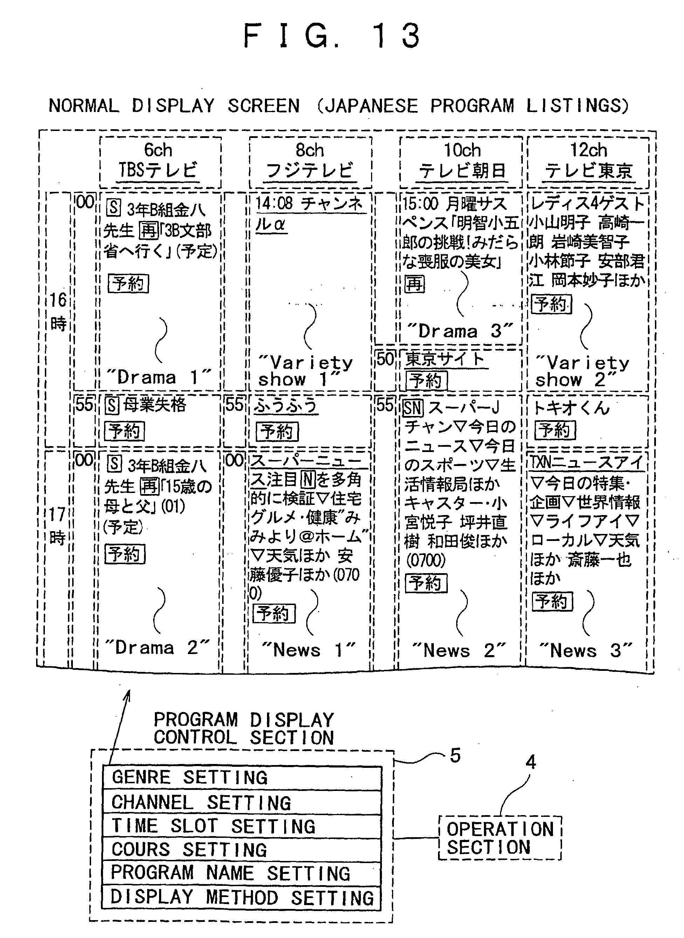

FIG. 13 shows another example of four channels 6ch, 8ch, 10ch, and 12ch in time slots between 16:00 and 17:00. The 6ch provides "drama 1" and "drama 2" in the 16:00 and 17:00 time slots. The 8ch provides "variety show 1" in the 16:00 time slot and "news 1" in the 17:00 time slot. The 10ch provides "drama 3" in the 16:00 time slot and "news 2" in the 17:00 time slot including the 16:00 time slot. The 12ch provides "variety show 2" in the 16:00 time slot and "news 3" in the 17:00 time slot.

The program display control section 5 can diversely vary display modes of the listed broadcast programs by changing the display mode setting. Settings that can be changed are available for genres, channels, time slots, "cours", program names, and display methods. Setup items are not limited thereto and can be changed or increased as needed.

Back to FIG. 2, if no setup item is changed in the program display, it is determined whether or not the display terminates. If the display termination is determined, the program listing terminates (steps ST2 and ST3).

If a setup item is changed at step ST2, the process changes the setting and returns to step ST1 (step ST4).

If the display does not terminate at step ST3, the process returns to step ST2 to confirm a change in the setup item.

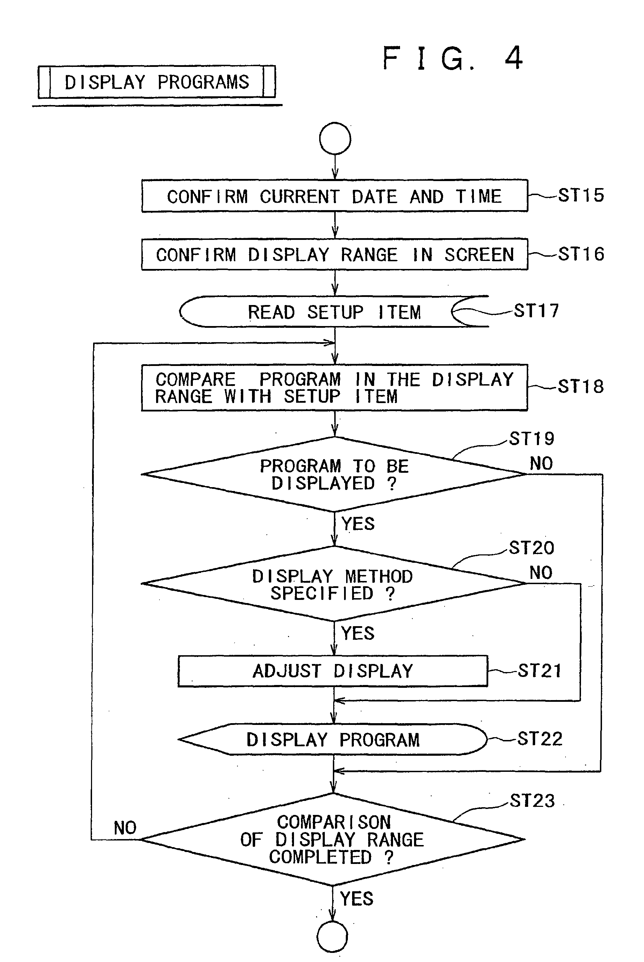

The program display at the above-mentioned step ST1 will now be described with reference to a flowchart in FIG. 4.

First, the current date and time are confirmed. A display range in the screen is confirmed. A setup item is then read (steps ST15, ST16, and ST17).

A broadcast program in the display range is compared with the setup item. A displayable broadcast program is selected and displayed (steps ST18 and ST19). If no broadcast program is displayed, the process confirms termination of the display range comparison and then terminates (steps ST19 and ST23).

If a broadcast program is displayed at step ST19, it is determined whether or not a display method is specified (step ST20). If no display method is specified, the broadcast program is displayed (step ST22).

If a display method is specified at step ST20, the display is adjusted (step ST21).

After the display is adjusted, it is determined whether or not the display range comparison is terminated. If the comparison does not terminate, the process advances to step ST18 to compare the program in the display range with the setup item.

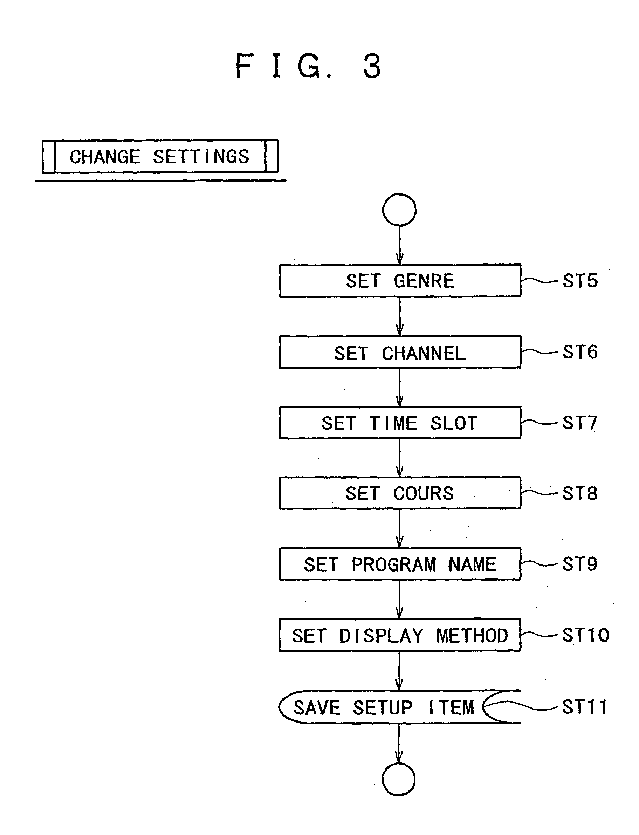

The setting change at step ST4 will now be described with reference to a flowchart in FIG. 3.

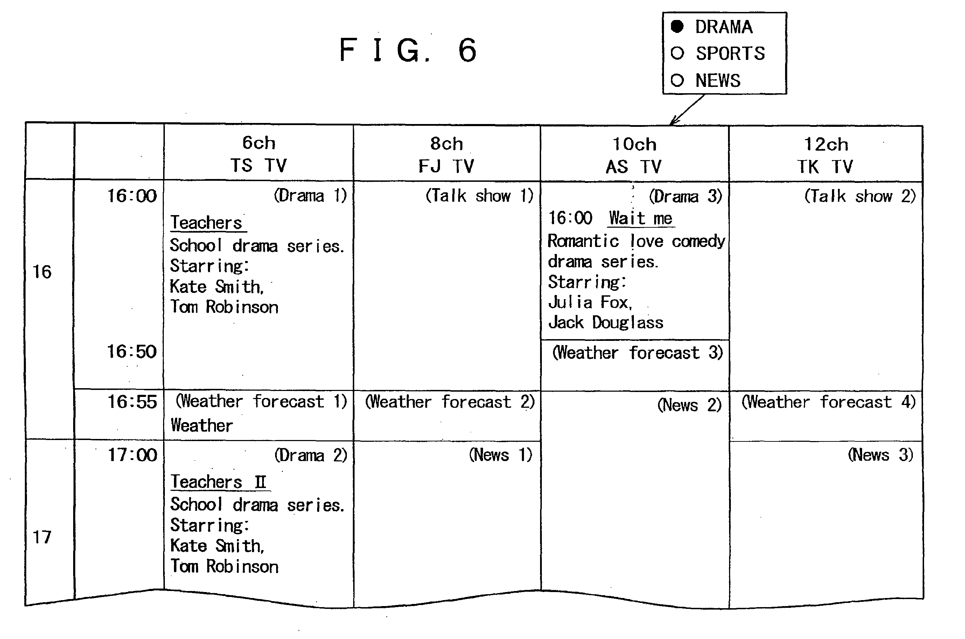

During the setting change, a genre is selected at step ST5. For example, Drama is selected as an intended genre from Drama, Sports, and News as shown in FIG. 6. The program display control section 5 selects and displays the contents of "drama 1" and "drama 2" in the 16:00 and 17:00 time slots for the 6ch (TS TV). The program display control section 5 selects and displays the content of "drama 3" in the 16:00 time slot for the 10ch (AS TV). In FIG. 6, the program display control section 5 hides "talk show 1", "talk show 2", "news 1", "news 2", "news 3", "weather forecast 1", "weather forecast 2", "weather forecast 3", and "weather forecast 4" other than the selected "drama 1", "drama 2", and "drama 3".

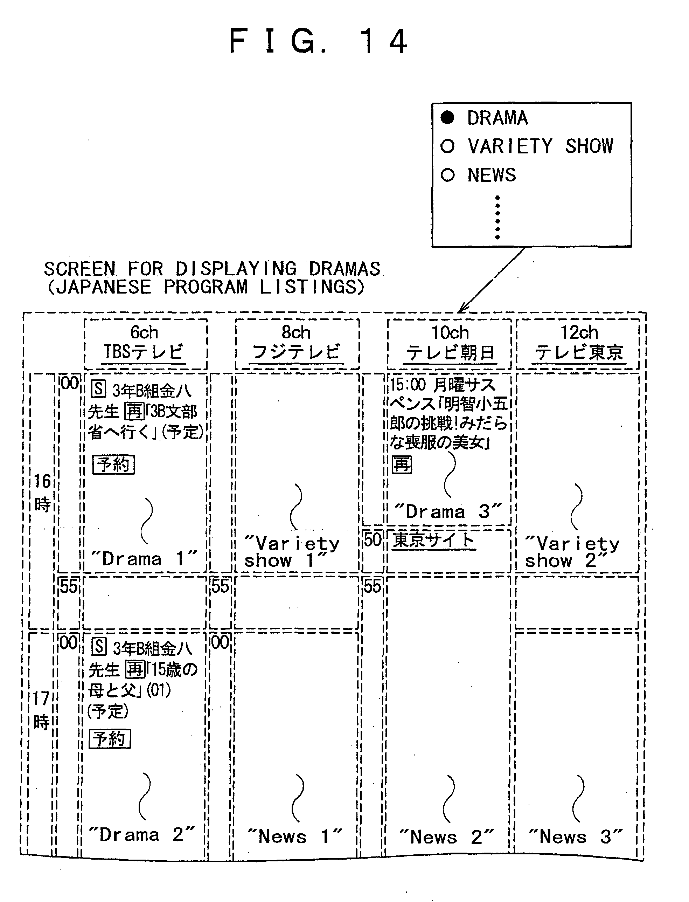

As another example, Drama is selected from Drama, Variety show, and News for a display screen in FIG. 14 corresponding to that in FIG. 6. The program display control section 5 selects and displays "drama 1" and "drama 2" in the 16 : 00 and 17:00 time slots for the 6ch and "drama 3" in the 16 : 00 time slot for the 10ch. In FIG. 14, the program display control section 5 hides "variety show 1", "variety show 2", "news 1", "news 2", and "news 3" other than the selected "drama 1", "drama 2", and "drama 3".

Back to FIG.3, after the genre is specified, a channel is then specified (step ST6). For example, selecting the 6ch in FIG. 6 can narrow the genre to be "Drama" and available dramas to be "drama 1" and "drama 2" in the 16:00 and 17:00 time slots.

Then, the time slot is specified (step ST7). For example, selecting the 16:00 or 17:00 time slot in FIG. 6 can specify "drama 1" or "drama 2" for the 6ch.

Then, the cours is specified (step ST8). The cours is a unit of a serial program. Normally, one cours is equivalent to thirteen weeks or three months. When "drama 1" of the 6ch is a drama series, for example, it is possible to set the number of broadcast times and specify the program as a drama series.

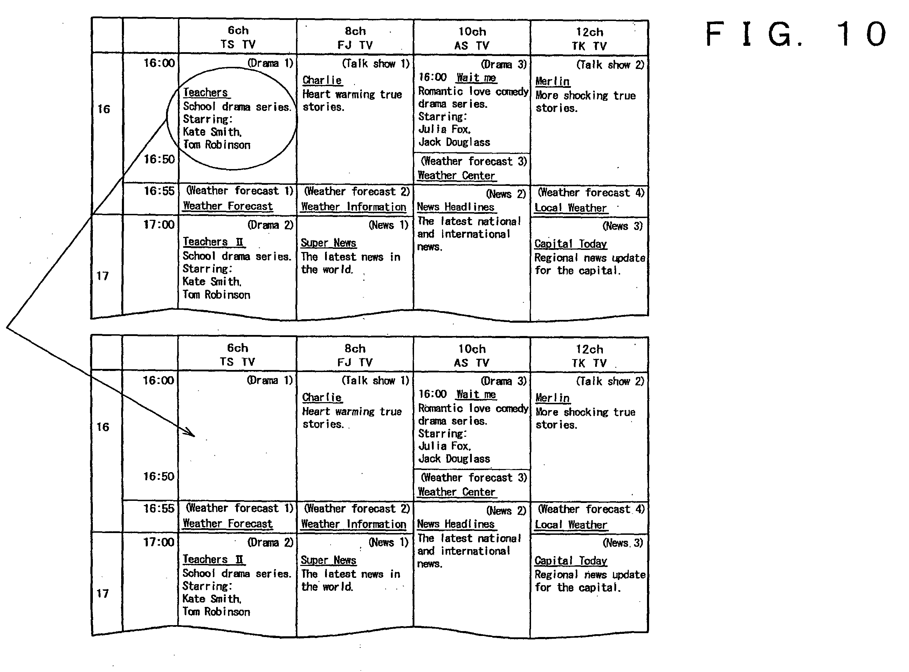

Then, the program name is specified (step ST9). When "drama 1" is directly specified as shown in FIG. 10, for example, the specified drama is displayed or hidden. While the displayed drama is hidden in FIG. 10, the hidden drama may be displayed. Further, it may be preferable to display only preferred programs and hide the other programs.

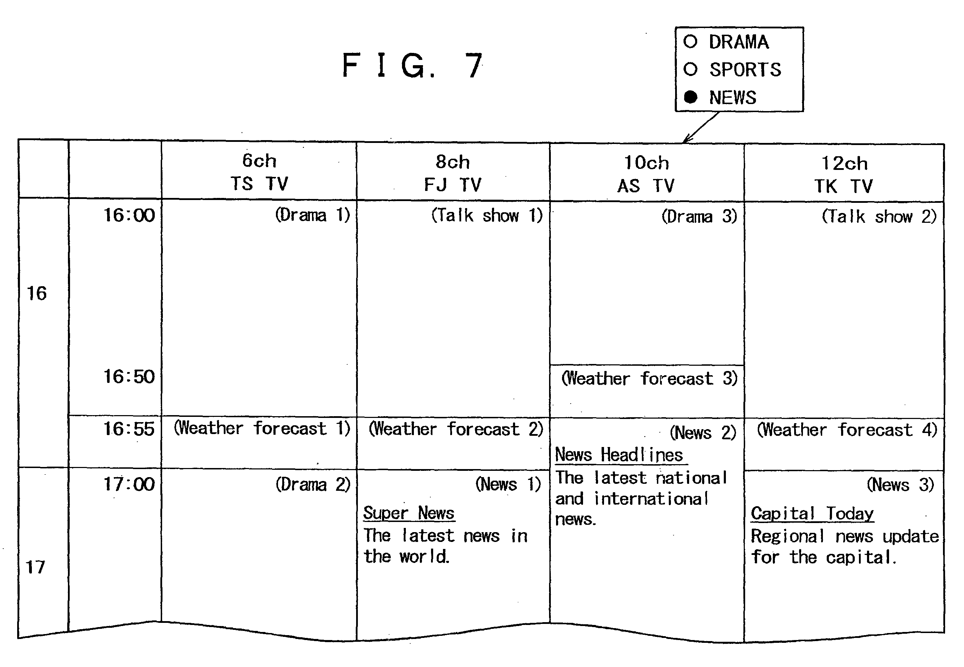

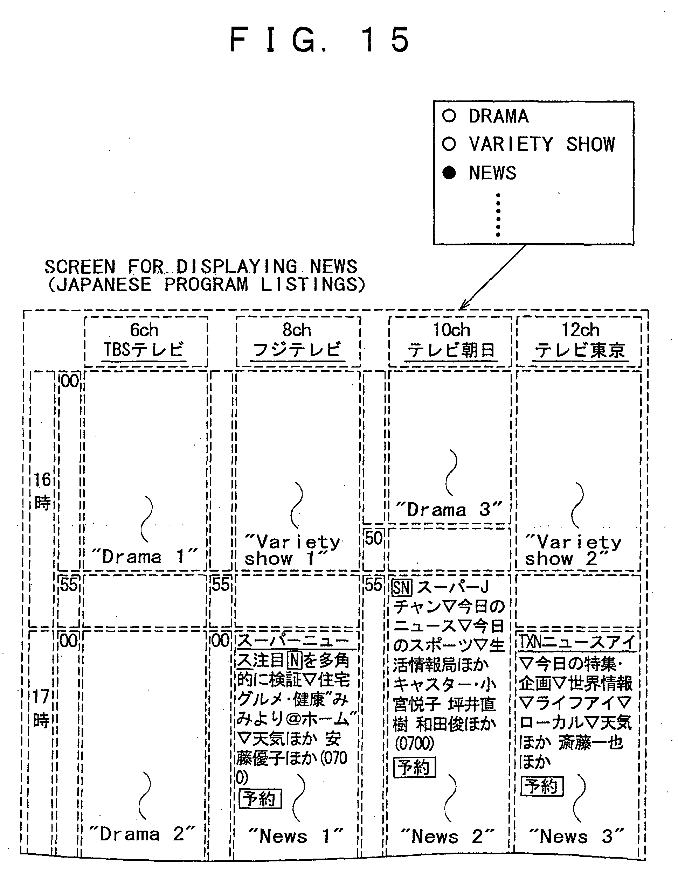

Now back to FIG. 3, the display method is specified (step ST10). As mentioned above, setting the display method varies the visibility depending on whether or not the broadcast program matches the interest. As an example of hiding uninterested programs, FIG. 7 shows that specifying the news genre hides programs other than "news 1", "news 2", and "news 3". As another example of hiding uninterested programs, FIG. 15 shows that specifying the news genre hides programs other than "news 1", "news 2", and "news 3".

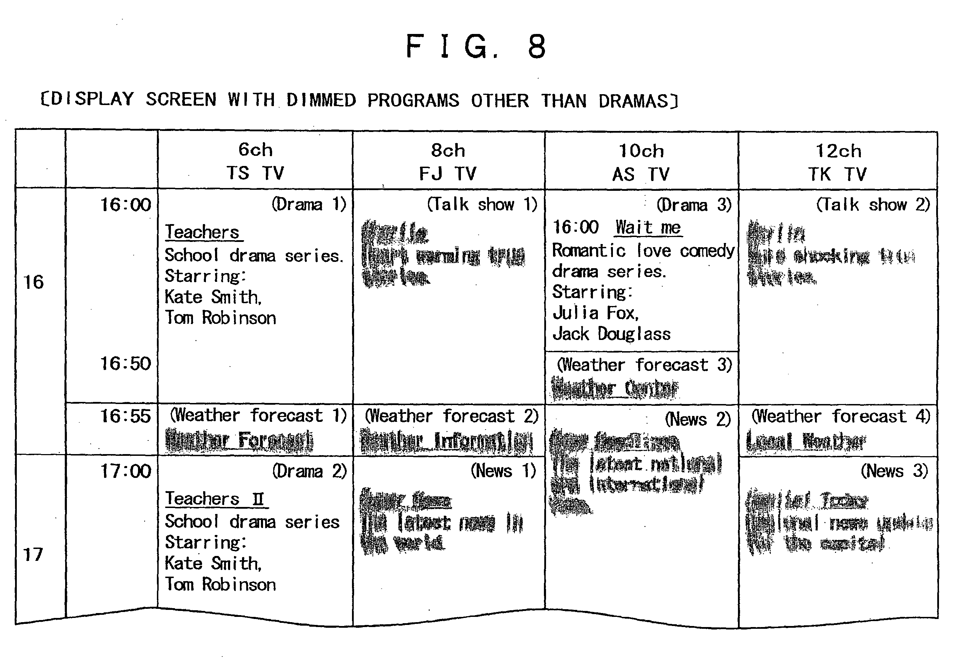

FIG. 8 shows an example of dimming programs other than selected programs, e.g., dramas. While "drama 1", "drama 2", and "drama 3" are unchanged, the other programs are dimmed to such a degree that a close look at the dimmed program can barely identify its content. That is to say, an unselected program is dimmed, not hidden, so as to be able to confirm its content in some degree. This makes it possible to satisfy audience's varying preferences.

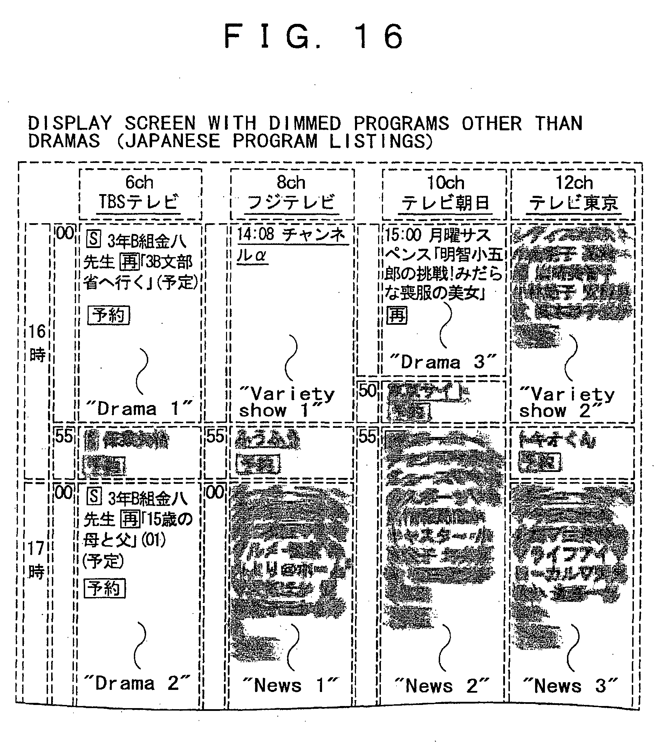

FIG. 16 shows another example of dimming programs other than selected programs, e.g., dramas. While "drama 1", "drama 2", and "drama 3" are unchanged, the other programs are dimmed to such a degree that a close look at the dimmed program can barely identify its content. That is to say, an unselected program is dimmed, not hidden, so as to be able to confirm its content in some degree. This makes it possible to satisfy audience's varying preferences.

This display method is very convenient and appropriate for identifying the other programs compared to the method of displaying only intended programs.

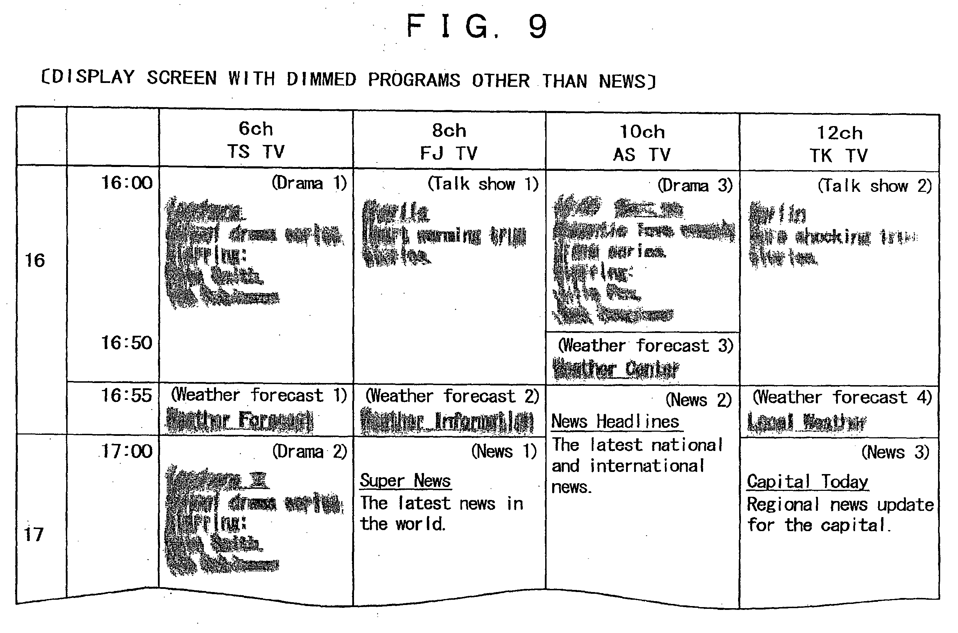

Likewise, FIG. 9 dims the other programs than news "news 1", "news 2", and "news 3" that are displayed normally. It is possible to easily find news programs and check to see which dramas are broadcast in a dimmed state.

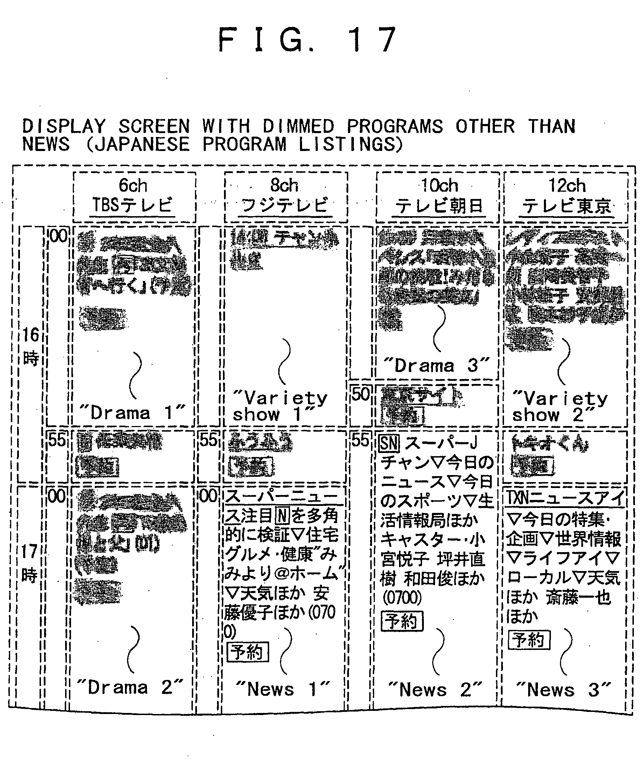

As another example, FIG. 17 dims the other programs than news "news 1", "news 2", and "news 3" that are displayed normally. It is possible to easily find news programs and check to see which dramas are broadcast in a dimmed state.

Back to FIG. 3, after completion of various settings, the specified setup items are saved and can be reused for the next operation (step ST11).

In addition to the above-mentioned examples, there may be a variety of display modes. While FIG. 9 shows the example of easily selecting news programs by dimming the other programs with degraded visibility, the similar effect can be obtained by changing the character size as mentioned above.

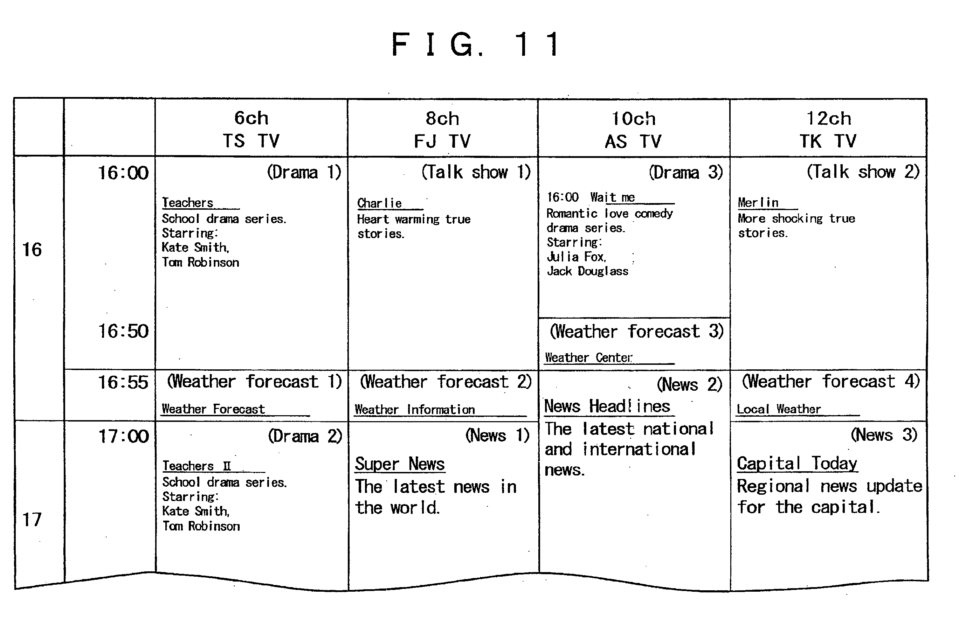

FIG. 11 shows an example of easily selecting news programs by using less legible small-size characters for programs other than the news. With respect to the display apparatus, changing the character size is easier than dimming the display. While increasing the character size may prevent a program from being fit in each cell of the program listing, decreasing the character size surely allows a program to be fit in the cell. This method is particularly effective for a program listing that displays characters in cells. Further, it may be preferable to provide several character sizes for different genres or stepwise change the easiness to select programs.

Referring now to the example in FIG. 11, unselected genres use a font size smaller than that used for the selected genre, too small a font size to be legible, or a barely legible font size so as to identify contents of the corresponding program by viewing the entire listing. The example in FIG. 11 uses the normal font size (e.g., 12-point) only for the news genre and uses a smaller font size for the drama, weather forecast, and talk show genres than that for the news genre.

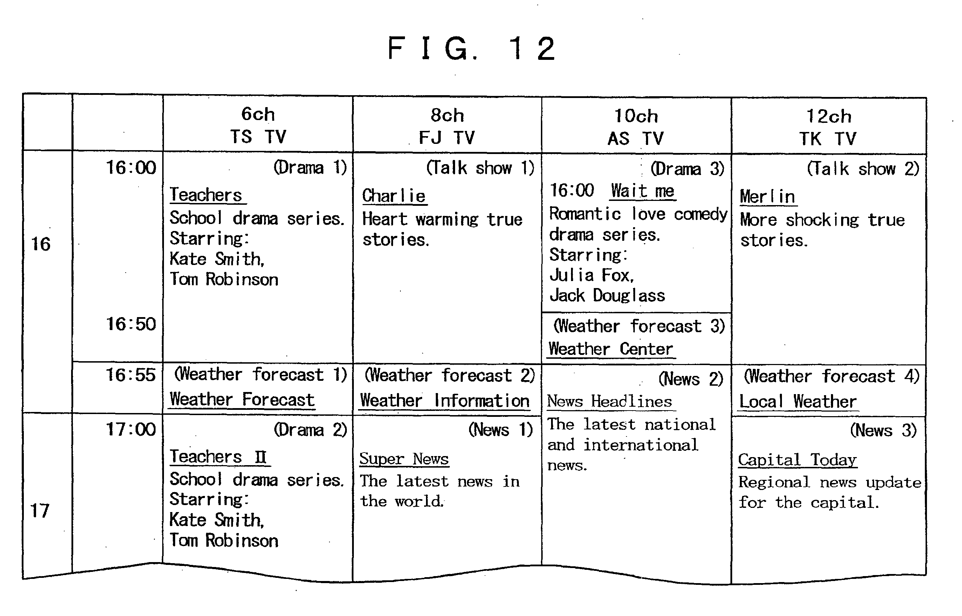

As mentioned above, it may be preferable to change fonts for easy selection of programs. There is a wide range of fonts. As shown in FIG. 12, for example, different fonts are used to display program genres or properties such as news, drama, talk show, and the like. This method is convenient for the audience in terms of being able to read and understand the program contents and identify the program genre and property according to the font type.

This feature will be explained more specifically with reference to an example in FIG. 12. A rounded font such as Gothic is used to display the drama genre such as "drama 1", "drama 2", and "drama 3". A dynamic font is used to display the talk show genre such as "talk show 1" and "talk show 2". A font associated with the weather is used to display the weather forecast genre such as "weather forecast 1", "weather forecast 2", "weather forecast 3", and "weather forecast 4". A font giving a stiff and precise impression is used to display the news genre such as "news 1", "news 2", and "news 3".

While there has been described the methods of easily selecting programs in the broadcast program listings by dimming characters, changing the font size, and varying font types, it is to be distinctly understood that the present invention is not limited thereto but may be otherwise variously embodied within the spirit and scope of the invention. The present invention is applicable to all available displays including not only the display of broadcast program listings, but also display modes including one that is characterized by unique visibility at a glance and one that can be identified from experience of repeated viewing.

As mentioned above, the broadcast program display method, the broadcast program display apparatus, and the broadcast receiver according to the present invention list broadcast programs matching an interest and the other broadcast programs with varied visibilities on the screen. Consequently, there are provided effects of effectively visualizing only the preferred program information out of many pieces of program information and easily retrieving and selecting broadcast programs.

## Claims

1. A broadcast program display method **characterized in that** an apparatus comprises a program display means for listing a broadcast program on a screen; and the program display means lists broadcast programs matching an interest and the other broadcast programs with varied visibilities on the screen.

2. The broadcast program display method according to claim 1 **characterized in that** the broadcast program matching an interest is selected in accordance with any of or a combination of a broadcast program genre, a broadcast program channel, a broadcasting time slot, broadcast program cours, and a broadcast program name.

3. The broadcast program display method according to claim 2, wherein the broadcast program genre comprises at least drama, news, and sport.

4. The broadcast program display method according to claim 1 **characterized in that** a displaymode for listingbroadcast programs with varied visibilities on a screen saves data for a setup item specified during selection of a broadcast program matching an interest and lists subsequent broadcast programs on the screen using the setup item data.

5. The broadcast program display method according to claim 1, wherein the display mode for listing broadcast programs with varied visibilities on a screen provides different displays for selected and unselected broadcast programs.

6. The broadcast program display method according to claim 5, wherein the display mode of providing different displays for selected and unselected broadcast programs does not change a display of selected broadcast programs and displays an unselected broadcast program in any of such states as hidden, dimmed, blurred, dimmed and blurred, displayed with a different color, blurred with a different color, dimmed with a different color, and dimmed and blurred with a different color.

7. The broadcast program display method according to claim 6, wherein the display mode by dimming can dim the displayed content as much as to make it unrecognizable.

8. The broadcast program display method according to claim 5, wherein the display mode of providing different displays for selected and unselected broadcast programs does not change a display of selected broadcast programs and displays an unselected broadcast program in any of such states as displayed with a different font and/or character size for character information, dimmed with a different font and/or character size for character information, blurred with a different font and/or character size for character information, dimmed and blurred with a different font and/or character size for character information, displayed with a different color and a different font and/or character size for character information, blurred with a different color and a different font and/or character size for character information, dimmed with a different color and a different font and/or character size for character information, and dimmed and blurred with a different color and a different font and/or character size for character information.

9. The broadcast program display method according to claim 8, wherein the display mode by dimming can dim the displayed content as much as to make it unrecognizable.

10. A broadcast program display apparatus comprising:
a reception section capable of receiving a broadcast program;
a display section capable of listing the received broadcast program;
an operation section which sets a display mode for broadcast programs listed on the display section; and
a program display control means for listing broadcast programs selected by an operation of the operation section so as to match an interest and the other broadcast programs with varied visibilities on the screen.

11. The broadcast program display apparatus according to claim 10 **characterized in that** the broadcast program matching an interest is selected in accordance with any of or a combination of a broadcast program genre, a broadcast program channel, a broadcasting time slot, broadcast program cours, and a broadcast program name.

12. The broadcast program display apparatus according to claim 10, wherein the broadcast program genre comprises at least drama, news, and sport.

13. The broadcast program display apparatus according to claim 10 **characterized in that** a display mode for listing broadcast programs with varied visibilities on a screen saves data for a setup item specified during selection of a broadcast program matching an interest and lists subsequent broadcast programs on the screen using the setup item data.

14. The broadcast program display apparatus according to claim 10, wherein the display mode for listing broadcast programs with varied visibilities on a screen provides different displays for selected and unselected broadcast programs.

15. The broadcast program display apparatus according to claim 14, wherein the display mode of providing different displays for selected and unselected broadcast programs does not change a display of selected broadcast programs and displays an unselectedbroadcast program in any of such states as hidden, dimmed, blurred, dimmed and blurred, displayed with a different color, blurred with a different color, dimmed with a different color, and dimmed and blurred with a different color.

16. The broadcast program display apparatus according to claim 15, wherein the display mode by dimming can dim the displayed content as much as to make it unrecognizable.

17. The broadcast program display apparatus according to claim 14, wherein the display mode of providing different displays for selected and unselected broadcast programs does not change a display of selected broadcast programs and displays an unselected broadcast program in anyof such states as displayed with a different font and/or character size for character information, dimmed with a different font and/or character size for character information, blurred with a different font and/or character size for character information, dimmed and blurred with a different font and/or character size for character information, displayed with a different color and a different font and/or character size for character information, blurred with a different color and a different font and/or character size for character information, dimmed with a different color and a different font and/or character size for character information, and dimmed and blurred with a different color and a dif f erent font and/or character size for character information.

18. A broadcast receiver having a tuner section to receive a broadcast signal and an output section to output the broadcast signal received by the tuner section, the broadcast receiver comprising:
a reception section capable of receiving a broadcast program;
a display section capable of listing the received broadcast program;
an operation section which sets a display mode for broadcast programs listed on the display section; and
a program display control means for listing broadcast programs selected by an operation of the operation section so as to match an interest and the other broadcast programs with varied visibilities on the screen.

19. The broadcast receiver according to claim 18 **characterized in that** the broadcast program matching an interest is selected in accordance with any of or a combination of a broadcast program genre, a broadcast program channel, a broadcasting time slot, broadcast program cours, and a broadcast program name.

20. The broadcast receiver according to claim 19, wherein the broadcast program genre comprises at least drama, news, and sport.

21. The broadcast receiver according to claim 18 **characterized in that** a display mode for listing broadcast programs with varied visibilities on a screen saves data for a setup item specified during selection of a broadcast program matching an interest and lists subsequent broadcast programs on the screen using the setup item data.

22. The broadcast receiver according to claim 18, wherein the display mode for listing broadcast programs with varied visibilities on a screen provides different displays for selected and unselected broadcast programs.

23. The broadcast receiver according to claim 22, wherein the display mode of providing different displays for selected and unselected broadcast programs does not change a display of selected broadcast programs and displays an unselected broadcast program in any of such states as hidden, dimmed, blurred, dimmed and blurred, displayed with a different color, blurred with a different color, dimmedwith a different color, and dimmed and blurred with a different color.

24. The broadcast receiver according to claim 23, wherein the display mode by dimming can dim the displayed content as much as to make it unrecognizable.

25. The broadcast receiver according to claim 22, wherein the display mode of providing different displays for selected and unselected broadcast programs does not change a display of selected broadcast programs and displays an unselected broadcast program in any of such states as displayed with a different font and/or character size for character information, dimmed with a different font and/or character size for character information, blurred with a different font and/or character size for character information, dimmed and blurred with a different font and/or character size for character information, displayed with a different color and a different font and/or character size for character information, blurred with a different color and a different font and/or character size for character information, dimmed with a different color and a different font and/or character size for character information, and dimmed and blurred with a different color and a different font and/or character size for character information.
